# EUROPEAN PATENT APPLICATION

(11) **EP 4 545 884 A1**
(43) Date of publication of application: **30.04.2025**
(21) Application number: 24208203.0
(22) Date of filing: 22.10.2024
(51) Int. Cl.: F25D 21/14, A47F 3/04, F25B 39/02, F25B 47/00, F28F 17/00, F28D 21/00

(54) **COMMERCIAL REFRIGERATION UNIT AND MICROCHANNEL EVAPORATOR FOR COMMERCIAL REFRIGERATION UNIT**

(30) Priority: 27.10.2023 US 202363593570 P
(71) Applicant: Carrier Corporation, Palm Beach Gardens, FL 33418 (US)
(72) Inventor: SIENEL, Tobias, Syracuse, 13221 (US); JOARDAR, Arindom, Syracuse, 13221 (US)
(74) Representative: Dehns

(57) **Abstract**

A commercial refrigeration unit (100) is disclosed, including an airflow device (102) adapted to circulate air an airflow zone (180), and a microchannel evaporator (104) disposed in the airflow zone (180) and adapted to exchange heat with the circulating air in the airflow zone (180). The microchannel evaporator (104) includes a plurality of flow circuits (202). Each flow circuit (202) includes at least one tube (204) adapted to allow a flow of refrigerant fluid therethrough. The microchannel evaporator (104) further includes a plurality of fin elements (230) adapted to removably couple with the plurality of flow circuits (202). The plurality of fin elements (230) is arranged such that a condensation passage is formed between at least some of the fin elements (230) to allow passage of condensate formed in the microchannel evaporator (104). The microchannel evaporator (104) is oriented in the airflow zone (180), such that the passage of condensate is downstream along a direction (182) of flow of circulating air towards a first surface (106) of the microchannel evaporator (104).

## Description

### TECHNICAL FIELD

This invention relates to a commercial refrigeration unit and more particularly, to a microchannel evaporator of the commercial refrigeration unit.

### BACKGROUND

Conventional commercial refrigeration units (CRU) include an airflow device, such as a fan adapted to circulate air in an airway zone that is adapted to maintain a display zone of the CRU within a predefined range of temperatures. The CRU may be used to store and showcase food products. In order to maintain a low temperature, the CRU are also provided with an evaporator disposed within the airway zone and adapted to exchange heat with the circulating air. While the heat exchange occurs, condensation and/or frosting may occur on the surface of the evaporator. Accumulation of condensation may reduce an efficiency of the evaporator to exchange heat with the circulating air.

There is, therefore, a requirement for a refrigeration unit where there is reduced accumulation of condensation during operation of the refrigeration unit.

### SUMMARY

According to a first aspect of the invention, there is provided a commercial refrigeration unit. The commercial refrigeration unit includes a display zone defining a region adapted for display of one or more products. The commercial refrigeration unit further includes an airflow device adapted to circulate air in an airflow zone of the commercial refrigeration unit. The commercial refrigeration unit further includes a microchannel evaporator disposed in the airflow zone and adapted to exchange heat with the circulating air in the airflow zone. The microchannel evaporator includes a plurality of flow circuits. Each flow circuit includes at least one tube adapted to allow a flow of refrigerant fluid therethrough. Each flow circuit further includes at least one inlet, and at least one outlet. The microchannel evaporator further includes a plurality of fin elements adapted to removably couple with the plurality of flow circuits. Each fin element includes at least one fin. Responsive to coupling of the plurality of fin elements with the plurality of flow circuits, the at least one fin of each of the plurality of fin elements is arranged in between at least some of the tubes of the plurality of flow circuits. The plurality of flow circuits is arranged such that an air passage is formed between at least some of the tubes to allow passage of the circulating air therethrough. The plurality of flow circuits is arranged such that the corresponding tubes of the plurality of flow circuits are in any or a combination of parallel and serpentine configurations. The plurality of fin elements is arranged such that a condensation passage is formed between at least some of the fin elements to allow passage of condensate formed in the microchannel evaporator. The microchannel evaporator is oriented in the airflow, such that the condensation passage allows the passage of condensate along a direction of flow of circulating air towards a first surface of the microchannel evaporator that is positioned downstream relative to the direction of flow of circulating air.

Optionally, the microchannel evaporator is oriented in the airflow zone, such that the first surface is at a first angle relative to a horizontal axis of the commercial refrigeration unit.

Optionally, the first angle is in a range from 10 degrees to 80 degrees.

Optionally, the commercial refrigeration unit further includes at least one inlet header and at least one exit header spaced apart from each other, and the one or more flow circuits of the microchannel evaporator are arranged between the at least one inlet and exit headers.

Optionally, the inlet header is fluidically coupled to the at least one inlet of each flow circuit.

Optionally, the exit header is fluidically coupled to the at least one outlet of each flow circuit.

Optionally, the inlet and exit headers each include one or more segments, wherein each segment of the inlet header is fluidically coupled to the at least one inlet of a flow circuit and each segment of the outlet header is fluidically coupled to the at least one outlet of a flow circuit.

Optionally, the commercial refrigeration unit further includes a distributer coupled to the at least one inlet of each of the flow circuits, wherein the distributer is adapted to supply the refrigerant fluid to the at least one inlet of each of the flow circuits.

Optionally, the distributer is any or a combination of a showerhead type distributer, a flow divider type distributer, an orifice hole type distributer, and an extended tube common header type distributer.

Optionally, each of the plurality of tubes includes a first rigid section starting from the inlet header, and a second rigid section separated from the first rigid section and ending at the exit header. The first and second rigid sections may be coupled by a flexible section.

Optionally, the microchannel evaporator is adapted to be folded at a portion of the evaporator including the flexible sections of the plurality of tubes, such that the first and second rigid sections are parallel relative to one another.

Optionally, the at least one tube of each flow circuit is arranged adjacent and parallel relative to each other.

Optionally, each flow circuit includes a plurality of tubes arranged adjacent and parallel relative to each other.

Optionally, the at least one tube of each flow circuit is a serpentine tube.

Optionally, each flow circuit includes a plurality of tubes. Each of the plurality of tubes may be a serpentine tube.

Optionally, the microchannel evaporator is located at a base of the commercial refrigeration unit.

Optionally, the microchannel evaporator is located at a back of the commercial refrigeration unit.

Optionally, the microchannel evaporator is arranged upstream of the airflow device.

Optionally, the microchannel evaporator is arranged downstream of the airflow device.

Optionally, the display zone includes an at least partially transparent covering separating the region adapted for display of the one or more products from an external environment.

According to a second aspect of the invention, there is provided a microchannel evaporator for a commercial refrigeration unit disposed in an airflow zone of the commercial refrigeration unit, and adapted to exchange heat with a circulating air in the airflow zone. The microchannel evaporator includes a plurality of flow circuits. Each flow circuit includes at least one tube adapted to allow a flow of refrigerant fluid therethrough. Each flow circuit further includes at least one inlet, and at least one outlet. The microchannel evaporator further includes a plurality of fin elements adapted to removably couple with the plurality of flow circuits. Each fin element includes at least one fin. Responsive to coupling of the plurality of fin elements with the plurality of flow circuits, the at least one fin of each of the plurality of fin elements is arranged in between at least some of the tubes of the plurality of flow circuits. The plurality of flow circuits is arranged such that an air passage is formed between at least some of the tubes to allow passage of the circulating air therethrough. The plurality of flow circuits is arranged such that the corresponding tubes of the plurality of flow circuits are in any or a combination of parallel and serpentine configurations. The plurality of fin elements is arranged such that a condensation passage is formed between at least some of the fin elements to allow passage of condensate formed in the microchannel evaporator. The microchannel evaporator is oriented in the airflow zone, such that the condensation passage allows the passage of condensate along a direction of flow of circulating air towards a first surface of the microchannel evaporator that is positioned downstream relative to the direction of flow of circulating air.

The foregoing summary is illustrative only and is not intended to be in any way limiting. In addition to the illustrative aspects, embodiments, and features described above, further aspects, embodiments, features, and techniques of the invention will become more apparent from the following description taken in conjunction with the drawings.

### BRIEF DESCRIPTION OF THE DRAWINGS

The accompanying drawings are included to provide a further understanding of the subject disclosure of this invention and are incorporated in and constitute a part of this specification. The drawings illustrate exemplary embodiments of the subject disclosure and, together with the description, serve to explain the principles of the subject disclosure.

In the drawings, similar components and/or features may have the same reference label. Further, various components of the same type may be distinguished by following the reference label with a second label that distinguishes among the similar components. If only the first reference label is used in the specification, the description is applicable to any one of the similar components having the same first reference label irrespective of the second reference label.
FIG. 1A is a schematic representation of a commercial refrigeration unit;
FIG. 1B is a schematic representation of another commercial refrigeration unit;
FIG. 2A is a detailed schematic representation of a microchannel evaporator of the commercial refrigeration unit of FIG. 1;
FIG. 2B is a detailed schematic representation of another microchannel evaporator of the commercial refrigeration unit of FIG. 1;
FIG. 2C is a detailed schematic representation of another microchannel evaporator of the commercial refrigeration unit of FIG. 1;
FIG. 2D is another detailed schematic representation of another microchannel evaporator of the commercial refrigeration unit of FIG. 1;
FIG. 2E is a schematic representation of a fin element of the microchannel evaporator of FIG. 2D;
FIG. 3A is a detailed schematic representation of another microchannel evaporator of the commercial refrigeration unit of FIG. 1;
FIG. 3B is a detailed schematic representation of another microchannel evaporator of the commercial refrigeration unit of FIG. 1;
FIG. 3C is an exemplary schematic representation of a showerhead type inlet distributor for the microchannel evaporator of FIG. 3A and/or FIG. 3B;
FIG. 3D is an exemplary schematic representation of a flow divider type inlet distributor for the microchannel evaporator of FIG. 3A and/or FIG. 3B;
FIG. 3E is an exemplary schematic representation of an orifice hole type inlet distributor for the microchannel evaporator of FIG. 3A and/or FIG. 3B;
FIG. 3F is an exemplary schematic representation of an extended tube common header type inlet distributor for the microchannel evaporator of FIG. 3A and/or FIG. 3B;
FIG. 4A is a detailed schematic representation of another microchannel evaporator of the commercial refrigeration unit of FIG. 1; and
FIG. 4B is a schematic representation of a commercial refrigeration unit including the microchannel evaporator of FIG. 4A.

### DETAILED DESCRIPTION

The following is a detailed description of embodiments of the disclosure depicted in the accompanying drawings. The embodiments are in such detail as to clearly communicate the disclosure. However, the amount of detail offered is not intended to limit the anticipated variations of embodiments; on the contrary, the intention is to cover all modifications, equivalents, and alternatives falling within the scope of the subject disclosure as defined by the appended claims.

Various terms are used herein. To the extent a term used in a claim is not defined below, it should be given the broadest definition persons in the pertinent art have given that term as reflected in printed publications and issued patents at the time of filing.

In the specification, reference may be made to the spatial relationships between various components and to the spatial orientation of various aspects of components as the devices are depicted in the attached drawings. However, as will be recognized by those skilled in the art after a complete reading of the subject disclosure, the components of this invention described herein may be positioned in any desired orientation. Thus, the use of terms such as "above," "below," "upper," "lower," "first," "second" or other like terms to describe a spatial relationship between various components or to describe the spatial orientation of aspects of such components should be understood to describe a relative relationship between the components or a spatial orientation of aspects of such components.

The use of the term "about" with reference to a numerical value includes ±10% of the numerical value, expressly including any narrow range within the given range of the numerical value as well as the exact numerical value.

The term "fluid" as used herein denotes any liquid, gas, liquid-gas mixture, and any mixture of solids in a liquid, gas or liquid-gas mixture that has fluid attributes, such as flowability or having appreciable fluidity.

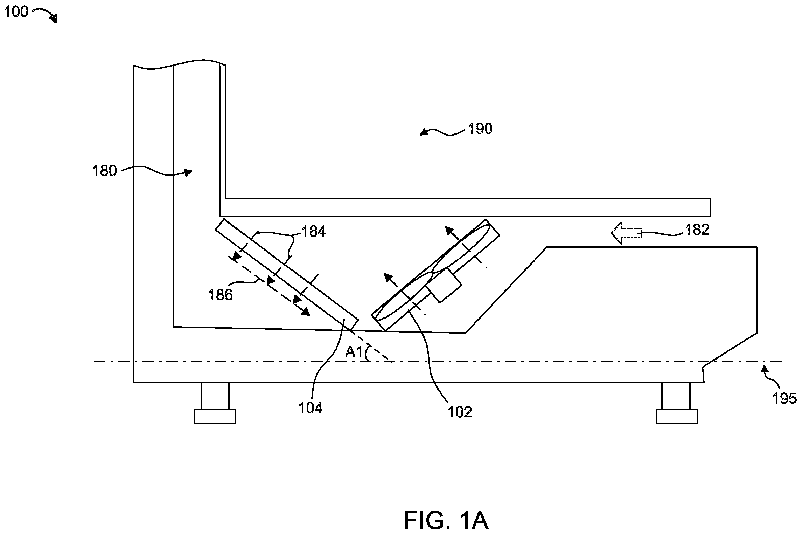

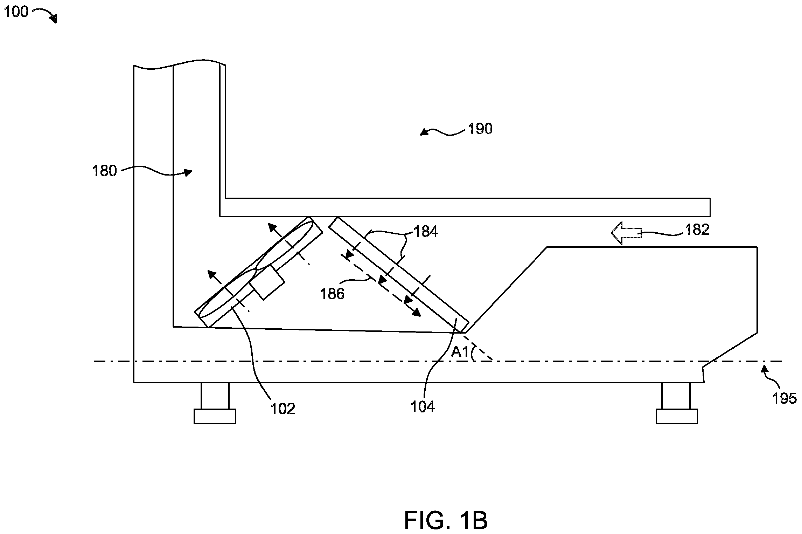

Referring to FIGs. 1A and 1B, schematic sectional representations of a commercial refrigeration unit (CRU) 100 is shown. The CRU 100 includes a display zone 190 defining a region adapted for display of one or more products (not shown). In some embodiments, the display zone 190 includes an at least partially transparent covering separating the region adapted for display of the one or more products from an external environment.

The one or more products may be food products requiring chilled storage. The CRU 100 further includes an airflow device 102 adapted to circulate air in an airflow zone 180 of the CRU 100. The airflow device 102 may include a fan. In the illustrated embodiment of FIG. 1, the airflow device 102 is located at a base of the CRU 100. However, in some other embodiments, the airflow device 102 may be located at a back of the CRU 100. The airflow device 102 may circulate air in the airflow zone 180 along a direction 182.

The CRU 100 further includes a microchannel evaporator 104 disposed in the airflow zone 180. The microchannel evaporator 104 is adapted to exchange heat with the circulating air in the airflow zone 180. Typically, the microchannel evaporator 104 is adapted to cool the circulating air in the airflow zone 180. In the illustrated embodiments of FIGs. 1A and 1B, the microchannel evaporator 104 is located at a base of the CRU 100. However, in some other embodiments, the microchannel evaporator 104 may be located at a back of the CRU 100. Further, in the illustrated embodiment of FIG. 1A, the microchannel evaporator 104 is arranged downstream of the airflow device 102. In the illustrated embodiment of FIG. 1B, the microchannel evaporator 104 is be arranged upstream of the airflow device 102.

Conventionally, a CRU may use round tube and plate fin (RTPF) heat exchangers. The RTPF heat exchangers have a relatively large internal volume, which may lead to a relatively large amount of refrigerant fluid charge necessary to operate them effectively.

Microchannel Heat Exchangers, on the other hand, typically have a substantially lower internal volume, thereby leading to a substantially lower amount of refrigerant fluid charge required for their effective operation. Furthermore, the use of lower charge is preferable for environmental reasons as well as for safety reasons when a flammable refrigerant is used.

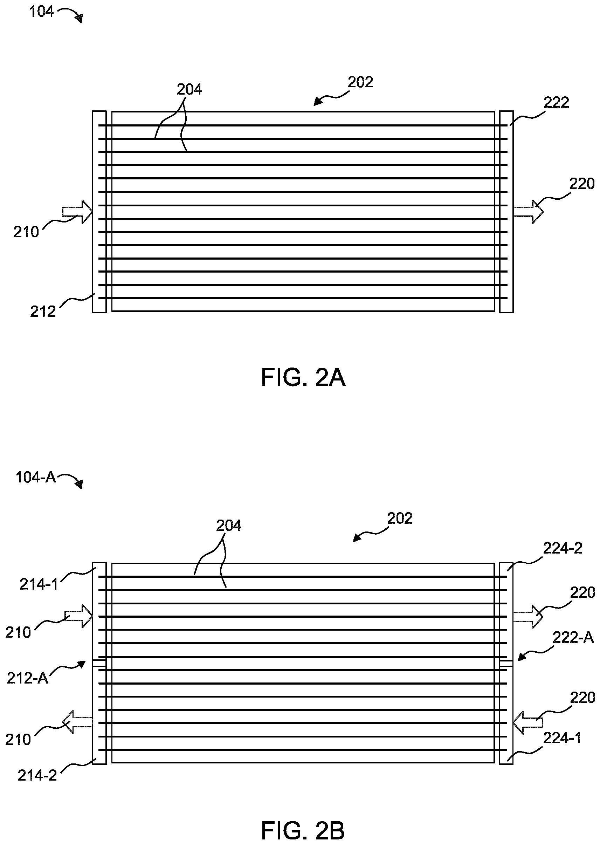

Referring to FIG. 2A, a detailed schematic representation of the microchannel evaporator 104 is shown. The microchannel evaporator 104 includes a plurality of flow circuits 202. Each flow circuit 202 includes at least one tube 204 adapted to allow a flow of refrigerant fluid (not shown) therethrough. The plurality of flow circuits 202 is arranged such that an air passage is formed between at least some of the tubes 204 to allow passage of the circulating air therethrough. Further, the plurality of flow circuits 202 is arranged such that the corresponding tubes 204 of the plurality of flow circuits 202 are in any or a combination of parallel and serpentine configurations. In the illustrated embodiment of FIG. 2A, the at least one tube 204 of each flow circuit 204 is arranged adjacent and parallel relative to each other. In some embodiments, each flow circuit 202 includes a plurality of tubes 204 arranged adjacent and parallel relative to each other. Each flow circuit 202 further includes at least one inlet 210, and at least one outlet 220. Referring now to FIGs. 1A to 2A, in some embodiments, the CRU 100 further includes at least one inlet header 212, and one exit header 222 spaced apart from each other, and disposed opposite each other. The plurality of flow circuits 202 are arranged between the inlet and exit headers 212, 222. In some embodiments, the inlet header 212 is fluidically coupled to the at least one inlet 210 of each flow circuit 202. The refrigerant fluid may flow into each of the flow circuits 202 from the inlet header 212, through the inlet 210 of the respective flow circuit 202. Similarly, in some embodiments, the exit header 222 is fluidically coupled to the at least one outlet 220 of each flow circuit 204. The circulating refrigerant fluid may exit the flow circuit 204, via the outlet 220, into the exit header 222.

Referring to FIG. 2B, a detailed schematic representation of another microchannel evaporator 104-A is shown. Referring now to FIGs. 1A to 2B, in some embodiments, the CRU 100 further includes at least one first header 212-A, and one second header 222-A spaced apart from each other, and disposed opposite each other. Further, the first and second headers 212-A, 222-A each include one or more segments 214, 224. In the illustrated embodiment of FIG. 2B, the first header 212-A includes segments 214-1, 214-2, and the second header 222-A includes segments 224-1, 224-2. The segments 214-1 and 224-1 may be inlet headers and the segments 214-2, 224-2 may be outlet headers. Each inlet header segment 214-1, 224-1 is fluidically coupled to the at least one inlet 210 of a flow circuit 202. Each outlet header segment 214-2, 224-2 is fluidically coupled to the at least one outlet 220 of a flow circuit 202. The microchannel evaporator 104-A of FIG. 2B may have a multi-circuit configuration including more than one inlet headers (214-1, 224-2) and corresponding more than one outlet headers (214-2, 224-2).

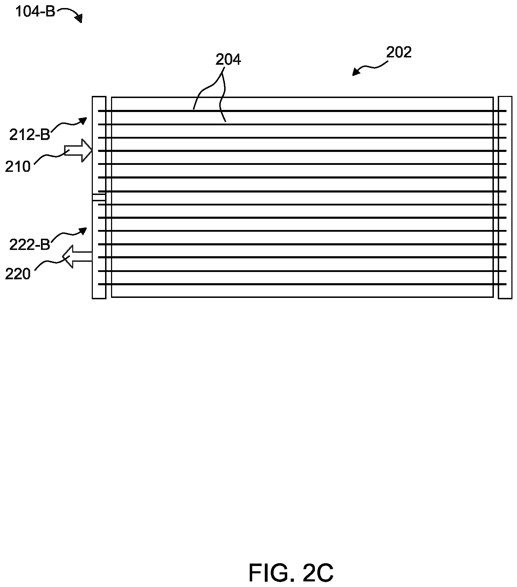

Referring to FIG. 2C, a detailed schematic representation of another microchannel evaporator 104-B is shown. Referring now to FIGs. 1A to 2C, in some embodiments, the CRU 100 further includes an inlet header 212-B, and an exit header 222-B disposed adjacent to each other. The inlet header 212-B is fluidically coupled to the at least one inlet 210 of a flow circuit 202, and the exit header 222-B is fluidically coupled to the at least one outlet 220 of a flow circuit 202. The microchannel evaporator 104-B may have a multipass configuration where the circulating refrigerant fluid may circulate from a first end of the microchannel evaporator 104-B, towards an opposite end, and then return to the first end.

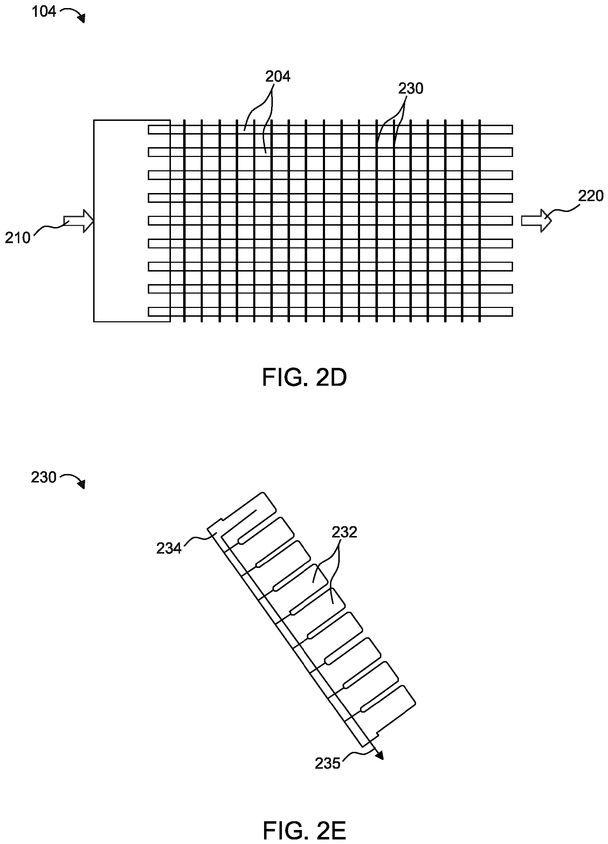

Referring to FIG. 2D, another detailed schematic representation of the microchannel evaporator 104 is shown. Referring now to FIGs. 1A to 2D, the microchannel evaporator 104 includes a plurality of fin elements 230 adapted to removably coupled with the plurality of flow circuits 202. In other words, the plurality of fin elements 230 may be a removable attachment that may be removably fitted onto the microchannel evaporator 104. Each fin element 230 includes at least one fin 232. Responsive to coupling of the plurality of fin elements 230 with the plurality of flow circuits 202, the at least one fin 232 of each of the plurality of fin elements 230 is arranged in between at least some of the tubes 204 of the plurality of flow circuits 202. In other words, the tubes 204 and the fin elements 230 may form an intersecting pattern. In some examples, the plurality of fin elements 230 may be oriented orthogonally relative to the at least some of the tubes 204 of the plurality of flow circuits 202. Further, the plurality of fin elements 230 is arranged such that a condensation passage is formed between at least some of the fin elements 230 to allow passage of condensate formed in the microchannel evaporator 104. In some embodiments, the passage may include a body 234 of the fin elements 230, as shown in FIG. 2E.

As the microchannel evaporator 104 exchanges heat with the circulating air in the airflow zone 180, condensation may be formed on the tubes 204 of the microchannel evaporator 104. It is important for the condensation to have a passage so that it may flow out of the microchannel evaporator 104, else excess condensation accumulating on the tubes 204 may reduce an efficiency of the microchannel evaporator 104. As the circulating air is circulating in the direction 182, the condensation may flow along the direction 182, assisted by the flow of circulating air. The condensation passages formed due to the fin elements 230 allow for the condensation to flow along the direction 182, and out of the microchannel evaporator 104.

Further, the microchannel evaporator 104 may be oriented in the airflow zone 180, such that the condensation passage allows the passage of condensate along the direction 182 of flow of circulating air towards a first surface 106 of the microchannel evaporator 104 that is positioned downstream relative to the direction 182 of flow of circulating air. In other words, due to the direction 182 of flow of the circulating air, the condensate may flow along a direction 184 that includes at least a component along a same direction as the direction 182 of circulating air.

Furthermore, the microchannel evaporator 104 may be oriented in the airflow zone 180, such that the first surface 106 is at a first angle A1 relative to the horizontal axis 195 of the CRU 100. In some embodiments, the first angle A1 may be from 10 degrees to 80 degrees.

Due to the orientation of the microchannel evaporator 104 at the first angle A1, the direction 184 of flow of condensate may include at least one component along a downward direction, specifically, along a direction of acceleration due to gravity. As a result, the condensate may flow along the first surface 106 along the direction 186, assisted by gravity. The combination of flow of condensate initially along the direction 184, and subsequently along the direction 186, due to respectively, the flow of circulating air and gravity allows for optimal drainage of condensate from the microchannel evaporator 104, thereby improving an efficiency of the microchannel evaporator 104.

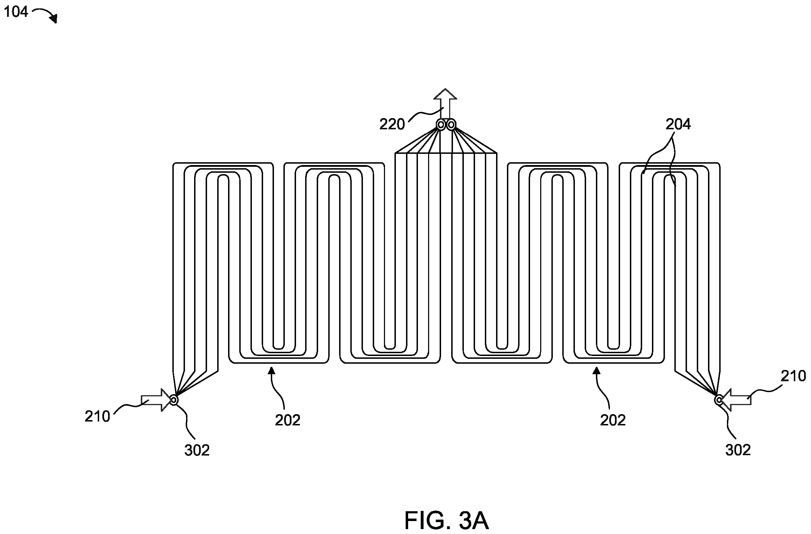

Referring to FIG. 3A, another detailed schematic representation of the microchannel evaporator 104 is shown. Referring now to FIGs. 1 and 3A, in some embodiments, each flow circuit 204 includes a plurality of tubes 202 and each of the plurality of tubes 204 is a serpentine tube. In some embodiments, the CRU 100 further includes an inlet distributer 302 coupled to the at least one inlet 210 of each of the flow circuits 202. The inlet distributer 302 is adapted to supply the refrigerant fluid to the at least one inlet 210 of each of the flow circuits 202.

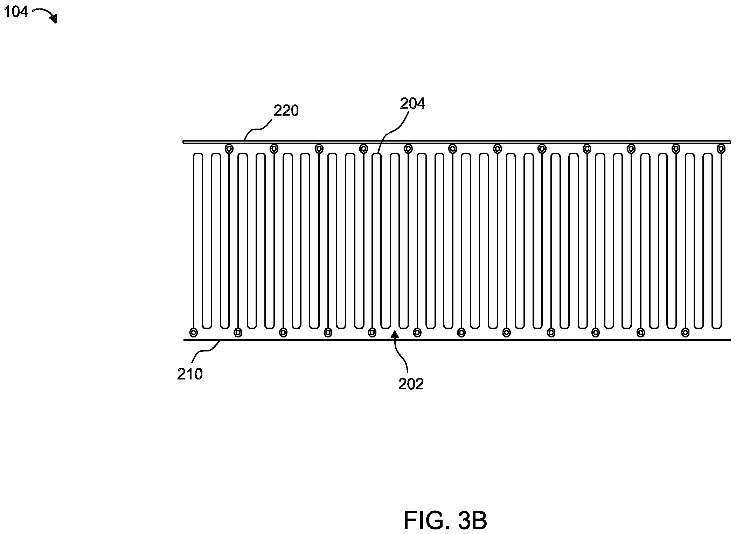

Referring to FIG. 3B, another detailed schematic representation of the microchannel evaporator 104 is shown. Referring now to FIGs. 1 and 3B, in some embodiments, the at least one tube 204 of each flow circuit 202 is a serpentine tube. In some embodiments, the CRU 100 further includes an inlet distributer 302 coupled to the at least one inlet 210 of each of the flow circuits 202. The inlet distributer 302 is adapted to supply the refrigerant fluid to the at least one inlet 210 of each of the flow circuits 202.

Referring now to FIGs. 3A and 3B, in some embodiments, the inlet distributer 302 is any or a combination of a showerhead type distributer, a flow divider type distributer, an orifice hole type distributer, and an extended tube common header type distributer.

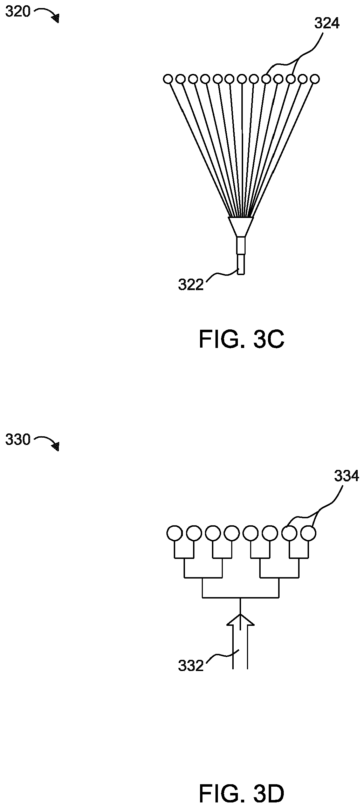

Referring to FIG. 3C, a schematic representation of a showerhead type distributer 320 is shown. The showerhead type distributer 320 includes an inlet 322 where refrigerant fluid may be supplied. The supplied refrigerant fluid may be distributed amongst a plurality of outlets 324 that may be distributed at the various inlet distributes 302 (shown in FIGs. 3A and 3B). Based on a length and/or a diameter of the outlet 324, a flow rate of refrigerant fluid may vary.

Referring to FIG. 3D, a schematic representation of a flow divider type distributer 330 is shown. The flow divider type distributer 330 includes an inlet 332 where refrigerant fluid may be supplied. The supplied refrigerant fluid may be distributed amongst a plurality of outlets 334 that may be distributed at the various inlet distributes 302 (shown in FIGs. 3A and 3B).

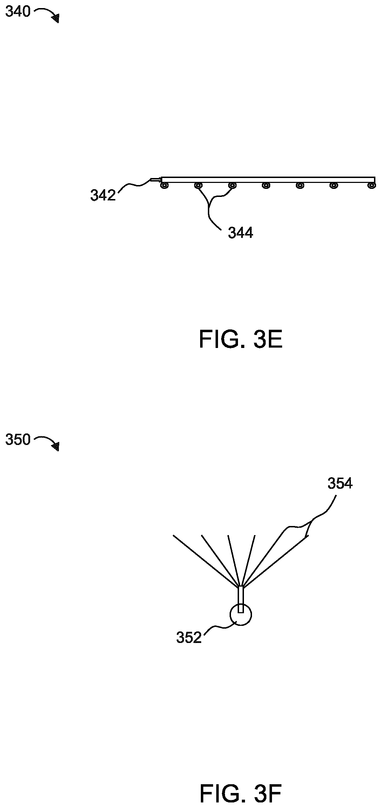

Referring to FIG. 3E, a schematic representation of an orifice hole type distributer 340 is shown. The orifice hole type distributer 340 includes an inlet 342 where refrigerant fluid may be supplied. The supplied refrigerant fluid may be distributed amongst a plurality of outlets 344 that may be distributed at the various inlet distributes 302 (shown in FIGs. 3A and 3B).

Referring to FIG. 3F, a schematic representation of an extended tube common header type distributer 350 is shown. The extended tube common header type distributer 350 includes an inlet 352 where refrigerant fluid may be supplied. The supplied refrigerant fluid may be distributed amongst a plurality of outlets 354 that may be distributed at the various inlet distributes 302 (shown in FIGs. 3A and 3B). Based on a length and/or a diameter of the outlet 354, a flow rate of refrigerant fluid may vary.

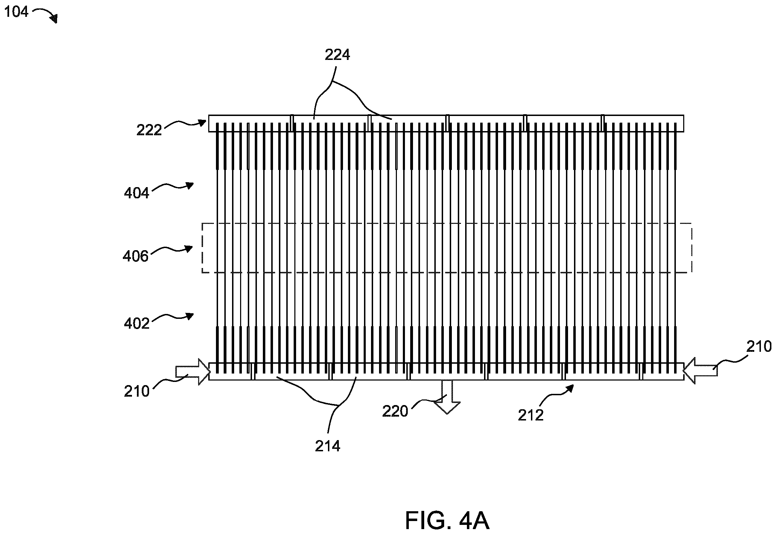

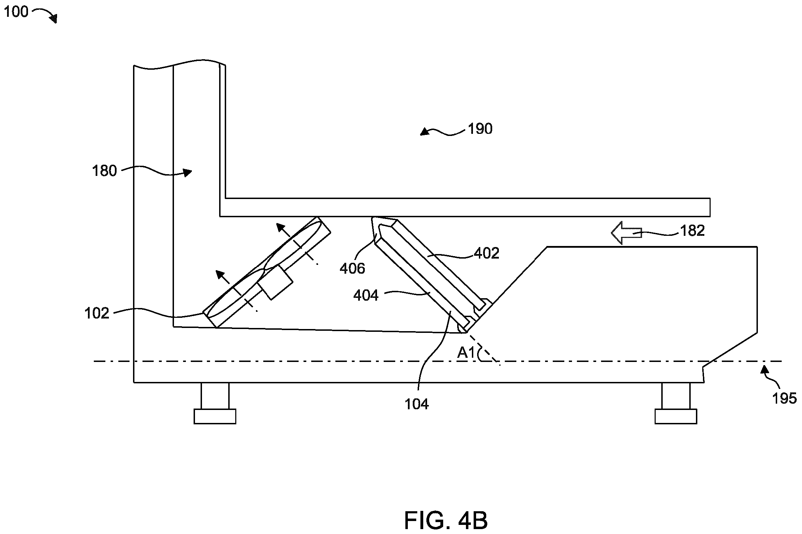

Referring to FIGs. 4A and 4B, another detailed schematic representation of the microchannel evaporator 104, and the CRU 100 including the microchannel evaporator 104 of FIG. 4A, respectively, are shown. The CRU 100 of FIG. 4B is substantially similar to the CRU 100 of FIG. 1. Hence, common components between the CRU 100 of FIG. 1 and the CRU 100 of FIG. 4B are referenced using the same reference numerals.

In the illustrated embodiment of FIG. 4A, each of the plurality of tubes 204 includes a first rigid section 402 starting from the inlet header 212, and a second rigid section 404 separated from the first rigid section 402 and ending at the exit header 222. The first and second rigid sections 402, 404 are coupled by a flexible section 406. In some embodiments, the microchannel evaporator 104 is adapted to be folded at a portion of the evaporator 104 including the flexible sections 406 of the plurality of tubes 204, such that the first and second rigid sections 402, 404 are oriented at a fourth angle relative to one another. In some embodiments, the fourth angle may be from about 15 degrees to about 50 degrees.

While the invention has been described with reference to exemplary embodiments, it will be understood by those skilled in the art that various changes may be made and equivalents may be substituted for elements thereof without departing from the scope of the invention as defined by the appended claims. Modifications may be made to adopt a particular situation or material to the teachings of the invention without departing from the scope thereof. Therefore, it is intended that the invention not be limited to the particular embodiment disclosed, but that the invention includes all embodiments falling within the scope of the invention as defined by the appended claims.

In interpreting the specification, all terms should be interpreted in the broadest possible manner consistent with the context. In particular, the terms "comprises" and "comprising" should be interpreted as referring to elements, components, or steps in a non-exclusive manner, indicating that the referenced elements, components, or steps may be present, or utilized, or combined with other elements, components, or steps that are not expressly referenced. Where the specification claims refer to at least one of something selected from the group consisting of A, B, C ....and N, the text should be interpreted as requiring only one element from the group, not A plus N, or B plus N, etc.

## Claims

1. A commercial refrigeration unit (100), comprising:
a display zone (190) defining a region adapted for display of one or more products;
an airflow device (102) adapted to circulate air along in an airflow zone (180) of the commercial refrigeration unit; and
a microchannel evaporator (104) disposed in the airflow zone and adapted to exchange heat with the circulating air in the airflow zone, the microchannel evaporator comprising:
a plurality of flow circuits (202), each flow circuit comprising at least one tube (204) adapted to allow a flow of refrigerant fluid therethrough, wherein each flow circuit further comprises at least one inlet (210), and at least one outlet (220);
a plurality of fin elements (230) adapted to removably couple with the plurality of flow circuits, each fin element comprising at least one fin (232), wherein, responsive to coupling of the plurality of fin elements with the plurality of flow circuits, the at least one fin of each of the plurality of fin elements is arranged in between at least some of the tubes of the plurality of flow circuits,
wherein the plurality of flow circuits is arranged such that an air passage is formed between at least some of the tubes to allow passage of the circulating air therethrough,
wherein the plurality of flow circuits is arranged such that the corresponding tubes of the plurality of flow circuits are in any or a combination of parallel and serpentine configurations, and
wherein the plurality of fin elements is arranged such that a condensation passage is formed between at least some of the fin elements to allow passage of condensate formed in the microchannel evaporator, and
wherein the microchannel evaporator is oriented in the airflow zone, such that the condensation passage allows the passage of condensate along a direction (182) of flow of circulating air towards a first surface (106) of the microchannel evaporator that is positioned downstream relative to the direction of flow of circulating air.

2. The commercial refrigeration unit of claim 1, wherein the microchannel evaporator is oriented in the airflow zone, such that the first surface is at a first angle (Al) relative to a horizontal axis (195) of the commercial refrigeration unit.

3. The commercial refrigeration unit of claim 2, wherein the first angle is in a range from 10 degrees to 80 degrees.

4. The commercial refrigeration unit of any preceding claim, further comprising at least one inlet header (212) and at least one exit header (222) spaced apart from each other, wherein the one or more flow circuits of the microchannel evaporator are arranged between the at least one inlet and exit headers.

5. The commercial refrigeration unit of claim 4, wherein the inlet header is fluidically coupled to the at least one inlet of each flow circuit.

6. The commercial refrigeration unit of claim 4 or 5, wherein the exit header is fluidically coupled to the at least one outlet of each flow circuit.

7. The commercial refrigeration unit of any of claims 4 to 6, wherein the inlet and exit headers each comprise one or more segments (214, 224), wherein each segment of the inlet header is fluidically coupled to the at least one inlet of a flow circuit, and wherein each segment of the outlet header is fluidically coupled to the at least one outlet of a flow circuit.

8. The commercial refrigeration unit of any preceding claim, further comprising a distributer (302) coupled to the at least one inlet of each of the flow circuits, the distributer adapted to supply the refrigerant fluid to the at least one inlet of each of the flow circuits; and, optionally
wherein the distributer is any or a combination of a showerhead type distributer (320), a flow divider type distributer (330), an orifice hole type distributer (340), and an extended tube common header type distributer (350).

9. The commercial refrigeration unit of any preceding claim, wherein each of the plurality of tubes comprises a first rigid section (402) starting from the inlet header, and a second rigid section (404) separated from the first rigid section, the second rigid section ending at the exit header, and wherein the first and second rigid sections are coupled by a flexible section (406); and, optionally
wherein the microchannel evaporator is adapted to be folded at a portion of the evaporator comprising the flexible sections of the plurality of tubes, such that the first and second rigid sections are parallel relative to one another.

10. The commercial refrigeration unit of any preceding claim, wherein the at least one tube of each flow circuit is arranged adjacent and parallel relative to each other.

11. The commercial refrigeration unit of any preceding claim, wherein each flow circuit comprises a plurality of tubes arranged adjacent and parallel relative to each other; and/or wherein the at least one tube of each flow circuit is a serpentine tube; and/or wherein each flow circuit comprises a plurality of tubes, and wherein each of the plurality of tubes is a serpentine tube.

12. The commercial refrigeration unit of any preceding claim, wherein the microchannel evaporator is located at a base of the commercial refrigeration unit; or
wherein the microchannel evaporator is located at a back of the commercial refrigeration unit.

13. The commercial refrigeration unit of any preceding claim, wherein the microchannel evaporator is arranged upstream of the airflow device; or
wherein the microchannel evaporator is arranged downstream of the airflow device.

14. The commercial refrigeration unit of any preceding claim, wherein the display zone comprises an at least partially transparent covering separating the region adapted for display of the one or more products from an external environment.

15. A microchannel evaporator (104) for a commercial refrigeration unit (100) disposed in an airflow zone (180) of the commercial refrigeration unit, and adapted to exchange heat with a circulating air in the airflow zone, the microchannel evaporator comprising:
a plurality of flow circuits (202), each flow circuit comprising at least one tube (204) adapted to allow a flow of refrigerant fluid therethrough, wherein each flow circuit further comprises at least one inlet (210), and at least one outlet (220);
a plurality of fin elements (230) adapted to removably couple with the plurality of flow circuits, each fin element comprising at least one fin (232), wherein, responsive to coupling of the plurality of fin elements with the plurality of flow circuits, the at least one fin of each of the plurality of fin elements is arranged in between at least some of the tubes of the plurality of flow circuits,
wherein the plurality of flow circuits is arranged such that an air passage is formed between at least some of the tubes to allow passage of the circulating air therethrough,
wherein the plurality of flow circuits is arranged such that the corresponding tubes of the plurality of flow circuits are in any or a combination of parallel and serpentine configurations,
wherein the plurality of fin elements is arranged such that a condensation passage is formed between at least some of the fin elements to allow passage of condensate formed in the microchannel evaporator, and
wherein the microchannel evaporator is oriented in the airflow zone, such that the condensation passage allows the passage of condensate along a direction (182) of flow of circulating air towards a first surface (106) of the microchannel evaporator that is positioned downstream relative to the direction of flow of circulating air.
